# EUROPEAN PATENT APPLICATION

(11) **EP 0 893 686 A1**
(43) Date of publication of application: **27.01.1999**
(21) Application number: 97202336.0
(22) Date of filing: 25.07.1997
(51) Int. Cl.: G01N 21/89, G01N 21/15

(54) **System for inspecting the lower face of a moving strip**

(71) Applicant: Hoogovens Technical Services Iron & Steel BV, 1951 JZ Velsen-Noord (NL)
(72) Inventor: de Muijnck, Andries Cornelis, 1851 XC Heiloo (NL); Kemp, Nicolaas Godefridus, 1702 XA Heerhugowaard (NL)
(74) Representative: Hansen, Willem Joseph Maria

(57) **Abstract**

A system for optically inspecting the lower face of a moving strip for defects in a production line said system comprising:
- optical means (1) for inspecting the lower face of the strip, comprising a light source (2) for illuminating the surface of the strip, and a camera (3) arranged in the path of the light from the source (2) reflected by the surface of the strip;
- electronic defect-indication means (4) respectively associated with the optical means (2, 3) for inspecting the lower face of the strip,
   characterized in that the optical means (1) comprises means (6) for keeping the visual field of the camera (3) to the strip free from liquid and/or solid contaminants.

## Description

The invention relates to a system for optically inspecting the lower face of a moving strip for defects in a production line, said system comprising:
- optical means for inspecting the lower face of the strip, comprising a light source for illuminating the surface of the strip, and a camera arranged in the path of the light from the source reflected by the surface of the strip in use;
- electronic defect-indication means respectively associated with the optical means for inspecting the lower face of the strip;

Systems according to the preamble are well-known for inspecting the surface during rolling of metals, and are particularly suitable for surface inspection of hot rolled steel.

During the hot rolling of steel all kinds of contaminents, e.g. liquid and solid particles, fall down and disturb the image of the surface detected by the camera and further decrease the life-expectancy of both the light source and the camera used.

It is a known technique to introduce a plate of glass just above the light source. This glass-plate is kept clean by applying a constant waterstream over the plate. In this manner it is prevented that contaminents fall directly on the light source and damage it, and further the field of view is kept relatively clear. However, this technique has some disadvantages, like the generation of a diffuse view because of the water stream and this technique can not readily been applied to the camera.

An object of the invention is to provide a system with reliable images of the surface and improved life-time for the auxileries in the system, in particular for the light source and the camera under severe industrial conditions, such as during the surface inspection of hot rolled steel.

A further object of the invention is to provide a system which requires less maintenance and has a great ease in operation.

In accordance with the invention a system of the type stated in the preamble is now provided, wherein the optical means comprises means for keeping the visual field of the camera to the strip free from liquid and/or solid contaminants.

In this manner the life-time expectancy of the light source and in particular of the camera is increased significantly under severe industrial conditions.

A prefered embodiments of the system in accordance with the present invention is characterized in that the means comprise a forced gasstream crossing the path of outward light from the light source and the path of the light reflected by the surface of the strip, and vice versa. These means can easily been applied underneath a conveyer and require only little maintenance. Since the moving metal strip is closing the hole between the rollers it is not possible to direct or blow the contaminents away in vertical direction. They are allowed to fall down from the strip, but are blown away sideways without damaging the auxileries of the system and keeping the camera sight clear. A further advantage of a forced gasstream is that they also apply cooling to heat generating sources from or near the system, e.g. the light source. Yet another advantage is that it removes fumes, e.g. steam.

For the gasstream air is prefered since this is readily available near most rolling mills. The air can be blown with a minimum exit pressure of 50 mm water pressure by means of ventilators.

In order to clear the visual field of the camera the gasstream has a velocity in a range of at least 20 m/sec. In this manner most contaminants which can occur during normal use of the system are blown away.

In another embodiment of the system in accordance with the invention it is characterized in that the means comprises a shield of plates between the rollers of the roller table, which shield has a narrow view slot to the strip.

By applying a construction of shielding plates the chance that liquid and/or solid contaminents appear in the visual field of the camera and the light source is reduced drastically which further improves the life-time expectance of the system and makes it more robust. If needed the narrow view slot to the strip can be closed by means of a shutter so the falling down of contaminents is prevented in case the system is out of normal use.

In a further embodiment of the system in accordance with the invention it is characterized in that the angle between the reflected light and the strip is in a range of 65-80°, and more preferably the angle between the outward light from the light source and the strip is in a range of 65-80°.

By way of example embodiments of the invention will now be described with reference to the drawings in which:
- Fig. 1 shows a block diagram of a rolling line, showing the location of the defect-detection device according to the invention;
- Fig. 2 shows schematically the system in accordance with the invention near a conveyer.

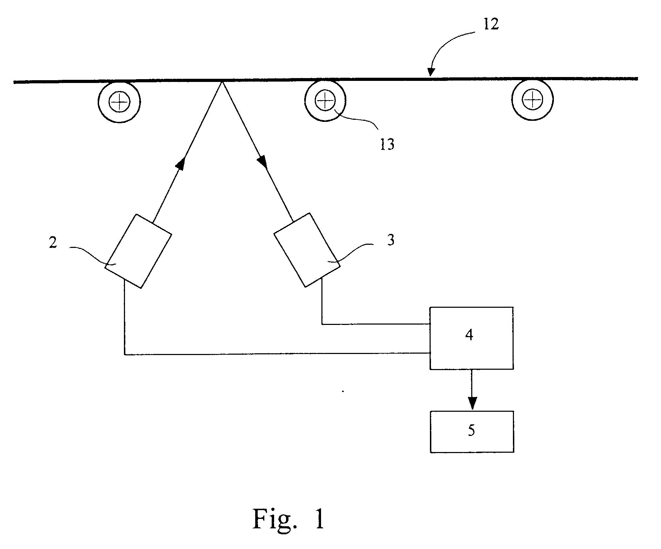

In Fig. 1 reference number (12) represents the moving metal sheet; reference number (13) rolls of the conveyor; reference number (2) the light source, in case of hot rolled sheet with an illumination at least three times the radiation of the hot plate; reference number (3) the camera, for which frequently a CCD-type camera is used; the light source's (2) luminiation intensity is controllable in width direction of the plate, so that the reflected light intensity from the plate is constant over the total width of the plate, seen from the camera; reference number (4) represents the electronic defect-indication means associated with the optical means (2, 3), several types can be used; and means with reference number (5) for processing data delivered by the electronic defect-indication means (4).

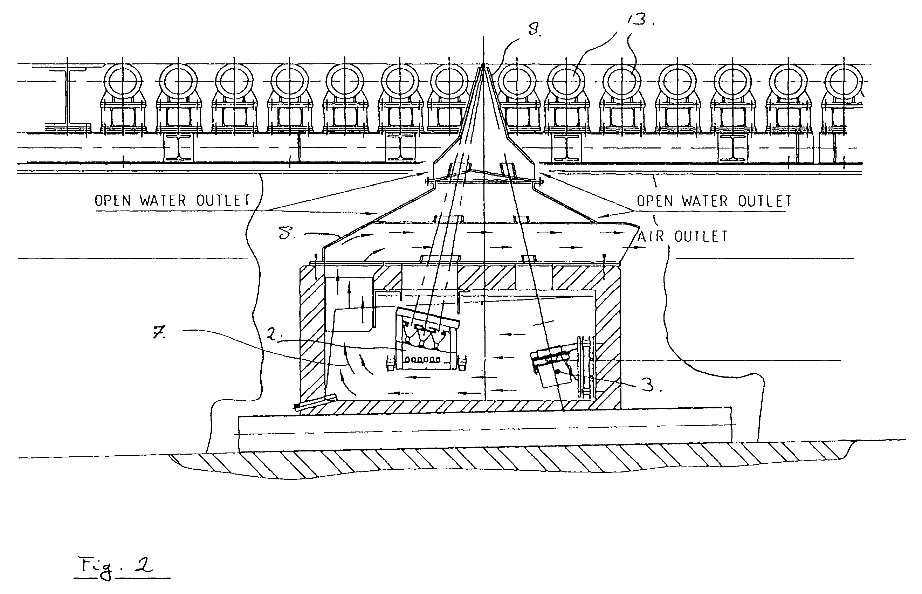

In Fig. 2 the shielding-construction with reference number (8) and the gasstream with reference number (7) is shown, which should prevent solid and/or liquid contaminants to fall either on the light source or on the camera. The angles of the camera and the light source with the hot plate are kept as large as possible in order to obtain a compact and robust construction. The construction underneath the conveyer has entry- and exit channels for the gasstream (7).

## Claims

1. A system for optically inspecting the lower face of a moving strip for defects in a production line said system comprising:
- optical means (1) for inspecting the lower face of the strip, comprising a light source (2) for illuminating the surface of the strip, and a camera (3) arranged in the path of the light from the source (2) reflected by the surface of the strip;
- electronic defect-indication means (4) respectively associated with the optical means (2, 3) for inspecting the lower face of the strip,
characterized in that the optical means (1) comprises means (6) for keeping the visual field of the camera (3) to the strip free from liquid and/or solid contaminants.

2. A system in accordance with claim 1, characterized in that the means (6) comprise a forced gasstream (7) crossing the path of outward light from the light source (2) and the path of the reflected light by the surface of the strip.

3. A system in accordance with claim 2, characterized in that the gasstream (7) comprises in essence air.

4. A system in accordance with claims 2 or 3, characterized in that the gasstream (7) has a velocity in a range of at least 20 m/sec.

5. A system in accordance with any one of the preceding claims, characterized in that the means (6) comprises a shield of plates (8) between the rollers of the roller table, which shield has a narrow slot to the strip.

6. A system in accordance with any one of the preceding claims, characterized in that the angle between the reflected light and the strip is in a range of 65-80°.

7. A system in accordance with claim 6, characterized in that the angle between the outward light from the light source (2) and the strip is in a range of 65-80°.
